Europäisches Patentamt

European Patent Office

Office européen des brevets

(11) Publication number: **0 561 411 A2**

# EUROPEAN PATENT APPLICATION

(21) Application number: 93104498.6

(22) Date of filing: **18.03.93**

(51) Int. Cl.5: **G06F 7/544**, G06F 7/52

(30) Priority: **19.03.92 JP 62958/92**

(43) Date of publication of application:
**22.09.93 Bulletin 93/38**

(84) Designated Contracting States:
**DE FR GB NL**

(71) Applicant: **NEC CORPORATION**
**7-1, Shiba 5-chome Minato-ku**
**Tokyo 108-01(JP)**

(72) Inventor: **Okamoto, Toshiyuki**
**c/o NEC Corporation, 7-1, Shiba 5-chome**
**Minato-ku, Tokyo(JP)**

(74) Representative: **Glawe, Delfs, Moll & Partner**
**Patentanwälte, Postfach 26 01 62**
**D-80058 München (DE)**

(54) **Adding multiplier.**

(57) An adding multiplier includes a Booth encoding circuit (1) having an adding circuit section (2) for adding a first and a second input data (X, Y) and an encoding circuit section (3) for encoding the first input data (X) in accordance with a Booth algorithm; and a partial product total summing circuit (4) for calculating a total sum of partial products in which the second data (Y) is transformed by output data from the Booth encoding circuit (1) in outputting a result of calculation of multiplication of the output from the adding circuit section (2) by a third input data (K). The delay time required in obtaining the result of an operation is reduced.

## FIG. 4

## BACKGROUND OF THE INVENTION

(1) Field of the Invention

The present invention relates to an adding multiplier, and more particularly to an adding multiplier in which the propagation delay time is short.

(2) Description of the Related Art

A conventional adding multiplier comprises an adding circuit and a multiplier.

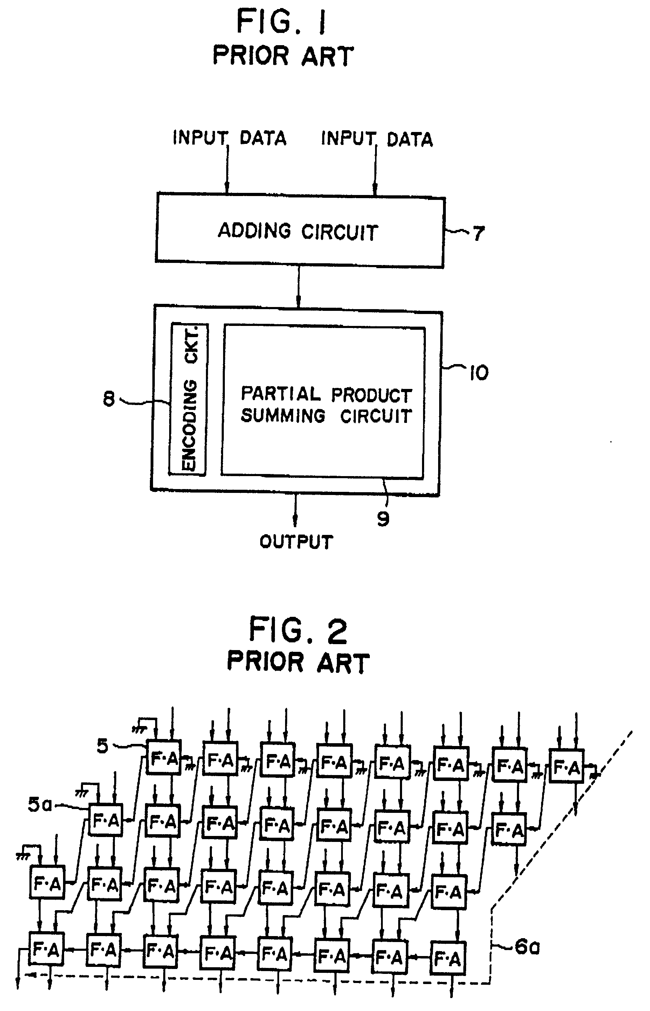

Fig. 1 is a block diagram of an adding multiplier illustrating a conventional example. As shown in Fig. 1, the conventional adding multiplier comprises an adding circuit 7 for adding two input data as well as a multiplier 10. This adding circuit 7 is constituted by a plurality of full adders, while the multiplier 10 is constituted by an encoding circuit 8 for encoding the input data in accordance with the Booth algorithm and a partial product summing circuit 9 for calculating partial products from other input data by means of output data from the encoding circuit 8 and for obtaining the total sum of these partial products. Each of the full adders constituting the adding circuit 7 is a circuit for outputting an added data and a carry output data from two 1-bit input data and a carry input data.

Next, a brief description will be given of the multiplier 10. As a typical method of numerical representation of digital data a method of representing 2's complements is generally known. A formula for transforming binary data $a_i$ (i = 0 to n-1) represented by 2's complements of n bits into decimal data X is shown by the following Formula (1):

$$X = a_{n-1} \cdot 2^{n-1} + \sum_{i=0}^{n-2} a_i \cdot 2^i \qquad \ldots \ (1)$$

Accordingly, the product of the n-bit data X and the n-bit data Y can be calculated as shown in the following Formula (2):

$$\left. \begin{array}{l} X \cdot Y = (a_{n-1} \cdot 2^{n-1} + \sum_{i=0}^{n-2} a_i \cdot 2^i) \cdot (b_{n-1} \cdot 2^{n-1} + \sum_{i=0}^{n-2} b_i \cdot 2^i) \\[20pt] = \sum_{i=0}^{n/2-1} P_i \cdot 2^{2i} \cdot X \\[20pt] P_i = -2b_{2i+1} + b_{2i} + b_{2i-1} \quad (b_{-1}=0, \ b_k=0 \ (k \geq n)) \end{array} \right\} \ (2)$$

Namely, it suffices if the coefficient $P_i$ is determined from the three adjacent terms ($b_{2i+1}$, $b_{2i}$, $b_{2i-1}$) of the data Y (i.e., encoding performed by the encoding circuit 8 in accordance with the Booth algorithm) and, then, the total sum is determined in accordance with the above Formula. Although there are various methods for determining this total sum, for example, a method is known in which a carry output data of each full adder is used as a carry input data for a lower-stage full adder.

Fig. 2 is a diagram of a specific configuration of the partial product summing circuit 9 shown in Fig. 1. As shown in Fig. 2, the circuit for calculating the total sum of partial products is configured by connecting together the full adders 5 in a plurality of stages, and the carry output data of each full adder 5 is used as a carry input data for each lower-stage full adder 5a. It should be noted that reference numeral 6a denotes a maximum propagation path.

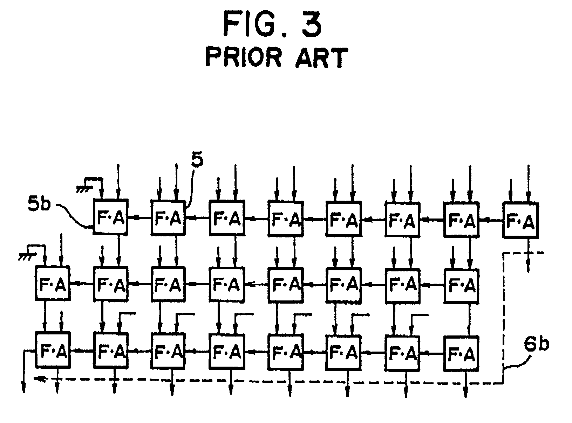

Fig. 3 is a diagram of another specific configuration of the partial product summing circuit 9 shown in Fig. 1. As shown in Fig. 3, in this case, a carry output data of each full adder 5 is inputted as a carry input data to each adjacent full adder 5b. Accordingly, if a comparison is made between the circuits shown in Figs. 2 and 3, the circuit shown in Fig. 2, unlike in the circuit shown in Fig. 3, makes it possible to increase the speed required in the operation performed by the partial product summing circuit 9. Paths 6a and 6b shown in Figs. 2 and 3 and representing the maximum propagation delay time are the same both in the case of Fig. 2 in which the delay involves a section of eleven full adders and in the case of Fig. 3 in which the delay similarly involves a section of eleven full adders. However, if the bit length in an operation becomes long, the difference appears noticeably. Although multiplication based on the Booth algorithm of the second order has been shown and described above, it should be noted that it is possible to use a method based on an algorithm of a higher order.

As described above, the multiplier 10 comprises the encoding circuit 8 for encoding input data in accordance with the Booth algorithm and the partial product summing circuit 9 for calculating partial products from other input data by means of output data from the encoding circuit 8 and for obtaining the total sum of these partial products.

With the conventional adding multipliers described above, the maximum propagation delay time required until the result of an operation is obtained corresponds to a section of 14 stages of full adders in terms of the propagation delay. Accordingly, there is a drawback in that the time required in obtaining the result of an operation becomes long. This is a drawback to be solved by the invention, in the conventional adding multiplier.

SUMMARY OF THE INVENTION

It is, therefore, an object of the present invention to provide an adding multiplier which is capable of reducing the delay time required in obtaining the result of an operation, thereby overcoming the above-described drawback of the conventional adding multiplier.

To this end, in accordance with the present invention, there is provided an adding multiplier comprising:
a Booth encoding circuit having an adding circuit section for adding a first and a second input data and an encoding circuit section for encoding the first input data in accordance with a Booth algorithm; and
a partial product total summing circuit for calculating a total sum of partial products in which the second input data is transformed by output data from the Booth encoding circuit in outputting a result of multiplication of output from the adding circuit by a third input data.

With the adding multiplier according to the invention, the delay time required in obtaining the result of an operation is greatly reduced, especially, in the case where the bit length is long.

BRIEF DESCRIPTION OF THE DRAWINGS

The above and other objects, features and advantages of the present invention will become more apparent from the following description of the invention when read in conjunction with the accompanying drawings, in which:
Fig. 1 is a circuit diagram of an adding multiplier in accordance with a conventional example;
Fig. 2 is a diagram of a specific configuration of a partial product summing circuit shown in Fig. 1;
Fig. 3 is a diagram of a specific configuration of another partial product summing circuit shown in Fig. 1;
Fig. 4 is a circuit diagram of an adding multiplier in accordance with an embodiment of the present invention; and
Fig. 5 is a circuit diagram of an adding multiplier in accordance with another embodiment of the present invention.

DESCRIPTION OF THE PREFERRED EMBODIMENTS

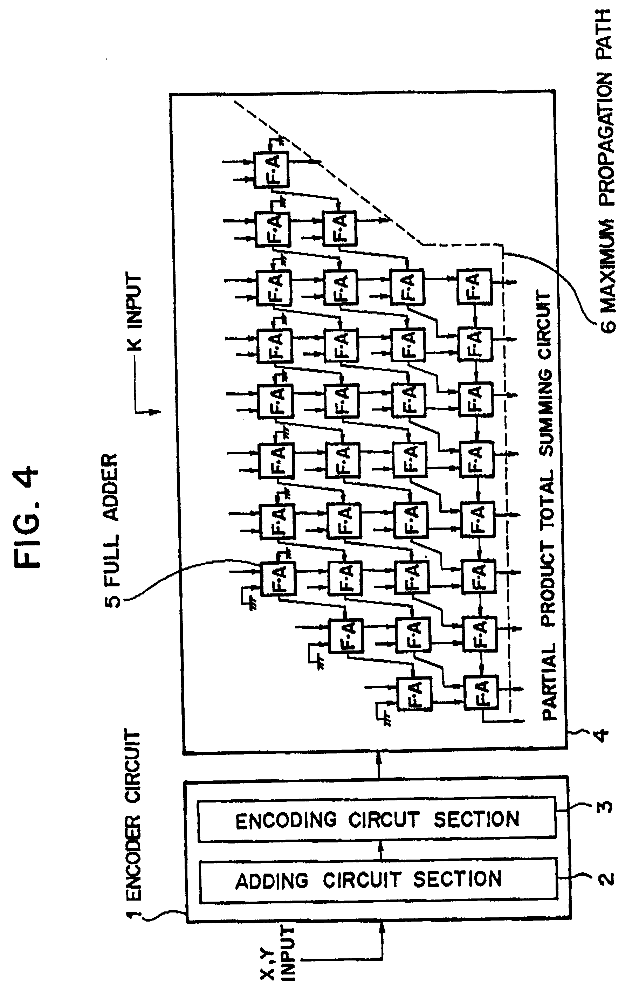

Referring now to the accompanying drawings, a description will be given of the preferred embodiments of the present invention. Fig. 4 is a circuit diagram of an adding multiplier in accordance with an embodiment of the present invention.

As shown in Fig. 4, the adding multiplier in this embodiment is a circuit for adding together two input data X and Y and, then, for multiplying the result of the addition by one input data K, that is, for calculating $(X+Y) \cdot K$. The adding multiplier comprises a Booth encoding circuit 1 for encoding $(X+Y)$ in accordance with the Booth algorithm, and a partial product total summing circuit 4 for calculating the total sum of partial products in accordance with outputs from the encoding circuit 1. In addition, the Booth encoding circuit 1 has an adding circuit section 2 for adding two inputs X and Y and an encoding circuit section 3 for encoding the result of this addition, while the partial product total summing circuit 4 is constituted by a plurality of full adders 5. One input of each of these full adders 5 corresponds to a partial product generated from the input

EP 0 561 411 A2

data K. It should be noted that the dotted line 6 denotes a maximum propagation path.

As for the partial products generated in correspondence with the output values of the above-described Booth encoding circuit 1, their total sum is calculated by the partial product total summing circuit 4, and a carry output data from each full adder 5 is supplied as a carry input data to the full adder 5 in an ensuing stage. The propagation delay time required in obtaining the total sum of these partial products corresponds to a section of eleven stages of the full adders 5. Meanwhile, the data X and the data Y are added by the adding circuit section 2, and the result is encoded by the encoding circuit section 3 in accordance with the Booth algorithm. With respect to the addition of the input data X and the input data Y, the propagation delay until the result is obtained corresponds to a section of eight stages of the full adders, but the encoded data of three lower bits is necessary for the first stage of the full adders 5 in calculating the total sum of the partial products. Accordingly, the propagation delay time which is additionally required in addition and multiplication corresponds to a section of three stages of the full adders, so that the propagation delay time in the total operation corresponds to a section of fourteen stages of the full adders. In this case, although the propagation delay time to completely sum up the two input data X and Y is the same as the conventional example described above. the partial products can be calculated with the progress of the addition so as to reduce the total time of the addition and the multiplication. In particular, if the bit length in an operation becomes long, the effect of the reduction of the calculation time appears noticeably.

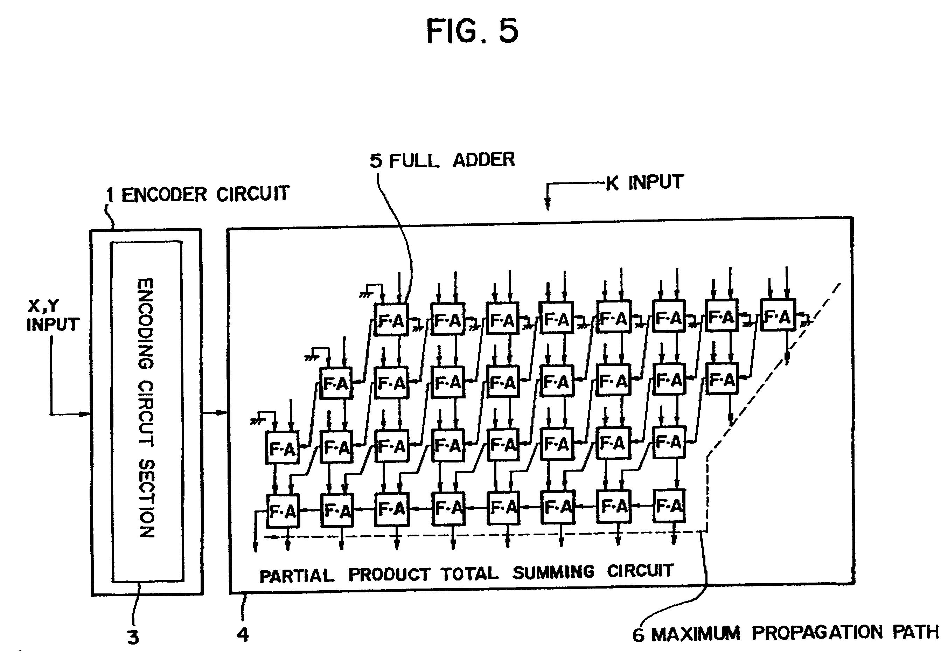

Fig. 5 is a circuit diagram of an adding multiplier in accordance with another embodiment of the present invention. As shown in Fig. 5, in this embodiment, the encoding circuit 1 for encoding the result of $(X + Y)$ in accordance with the Booth algorithm is realized in accordance with an operation using the coefficient $P_i$ shown in the following Formula (3):

$$P_i = -2(a_{2i+1} + b_{2i+1}) + (a_{2i} + b_{2i}) + (a_{2i-1} + b_{2i-1}) \qquad (3)$$

In the case of this embodiment, the partial product total summing circuit 4 is configured in the same way as the foregoing embodiment, and although the delay time in the encoding circuit 1 becomes slightly long, the delay time required in the total operation corresponds to a section of eleven stages of the full adders 5.

As described above, the adding multiplier in accordance with the present invention offers the advantage that the operating time required in addition and multiplication can be reduced.

While the invention has been described in its preferred embodiments, it is to be understood that the words which have been used are words of description rather than limitation and that changes within the purview of the appended claims may be made without departing from the true scope and spirit of the invention in its broader aspects.

**Claims**

1. An adding multiplier characterized by comprising:
a Booth encoding circuit (1) having an adding circuit section (2) for adding a first and a second input data (X,Y) and an encoding circuit section (3) for encoding the first input data (X) in accordance with a Booth algorithm; and
a partial product total summing circuit (4) for calculating a total sum of partial products in which the second input data (Y) is transformed by output data from said Booth encoding circuit (1) in outputting a result of multiplication of output from said adding circuit (2) by a third input data (K).

2. An adding multiplier according to claim 1, wherein said Booth encoding circuit (1) is configured by incorporating said adding circuit section (2) in said encoding circuit section (3).

3. An adding multiplier according to claim 1, wherein said partial product total summing circuit (4) is constituted by a plurality of full adders (5) arranged at a plurality of stages.

4. An adding multiplier according to claim 3, wherein a carry output terminal of each of said full adders (5) is connected, for supplying a carry data, to a carry input terminal of each of said full adders in an ensuing stage.

5. An adding multiplier characterized by comprising:
a Booth encoding circuit (1) having an adding circuit section (2) for adding a first and a second input data (X,Y) and an encoding circuit section (3) for encoding an output of said adding circuit section

4

(2) in accordance with a Booth algorithm; and

a partial product total summing circuit (4) for calculating a total sum of partial products which are produced by multiplying an output of said Booth encoding circuit (1) and a third input data (K).

6.   An adding multiplier characterized by comprising:

a Booth encoding circuit (1) for encoding a first binary input data (X) and a second binary input data (Y) with each predetermined number of digits of said first and second binary input data (X,Y); and

a partial product total summing circuit (4) for summing up partial products each produced by multiplying an output of said Booth encoding circuit (1) and a third input data (K).

# FIG. 1
## PRIOR ART

INPUT DATA          INPUT DATA

ADDING CIRCUIT          ~7

ENCODING CKT.

PARTIAL PRODUCT
SUMMING CIRCUIT          ~10

8

9

OUTPUT

# FIG. 2
## PRIOR ART

5

5a

6a

F·A

# FIG. 3
## PRIOR ART

# FIG. 4

PARTIAL PRODUCT TOTAL SUMMING CIRCUIT

1 ENCODER CIRCUIT

5 FULL ADDER

K INPUT

X,Y INPUT

ADDING CIRCUIT SECTION

ENCODING CIRCUIT SECTION

F·A

6 MAXIMUM PROPAGATION PATH

2    3    4

8

EP 0 561 411 A2

# FIG. 5

**5 FULL ADDER**

**K INPUT**

**1 ENCODER CIRCUIT**

**X,Y INPUT**

ENCODING CIRCUT SECTION

PARTIAL PRODUCT TOTAL SUMMING CIRCUIT

**6 MAXIMUM PROPAGATION PATH**

3

4

EP 0 561 411 A2